# EUROPÄISCHE PATENTSCHRIFT

(11) **EP 0 652 629 B1**
(45) Veröffentlichungstag und Bekanntmachung des Hinweises auf die Patenterteilung: **27.08.1997**
(21) Anmeldenummer: 94115911.3
(22) Anmeldetag: 08.10.1994
(51) Int. Cl.: H02K 33/00, G02B 7/182, F16C 11/12

(54) **Lagerung für einen drehwinkelbegrenzten Rotor**
Bearing assembly for limited rotation rotor
Agencement de support pour rotor à rotation limitée

(30) Priorität: 05.11.1993 DE 4337800
(43) Veröffentlichungstag der Anmeldung: 10.05.1995
(73) Patentinhaber: Carl Zeiss, D-89518 Heidenheim (Brenz) (DE); CARL-ZEISS-STIFTUNG, trading as CARL ZEISS, 89518 Heidenheim (DE)
(72) Erfinder: Peters, Jörg-Roger, D-24241 Schmalstede (DE); Wieland, Manfred, D-24146 Kiel (DE); Fichtner, Karl-Heinz, D-24229 Strande (DE); Böhl, Joachim, D-24229 Kaltenhof (DE)

(56) Entgegenhaltungen:
- DE-A- 1 522 481
- US-A- 3 165 676
- US-A- 3 415 283
- US-A- 3 624 574

## Beschreibung

Die Patentanmeldung betrifft eine Lagerung für einen drehwinkelbegrenzten Rotor mit einer Rotordrehachse und mindestens einem elastischen Rückstellelement.

Derartige Anordnungen werden auch Drehschwinger genannt und sind in der Feinwerktechnik häufig anzutreffen, z.B. in Uhren oder in Galvanometerscannern. Dabei ist immer eine elastische Winkelrückstellung mit einer drehbar gelagerten Masse verbunden. Diese Masse besteht z.B. bei einem Galvanometerscanner aus dem Motoranker und dem anzutreibenden Spiegel.

Galvanometerscanner sind erst seit ungefähr 20 Jahren in der Patentliteratur beschrieben. So ist aus dem US-Patent 3 624 574 eine Aktuator-Anordnung bekannt. Dabei ist ein Weicheisen-Rotor zwischen zwei Kugellagern gelagert. Ein Torsionsstab ist entweder konzentrisch in einer achsialen Rotorbohrung angebracht oder als achsiale Verlängerung des Rotors ausgeführt.

Aus der US-PS 4 135 119 ist ein Motor mit begrenzter Rotation bekannt. Dabei ist ein Weicheisenrotor zwischen zwei Kugellagern gelagert. Ein Torsionsstab ist konzentrisch in einer achsialen Rotorbohrung angeordnet. Durch radiale magnetische Kräfte werden die Kugellager radial belastet, um einen spielfreien Lauf zu gewährleisten und um das Rollen der Kugeln zu fördern. Die Anordnung des Torsionsstabes im Inneren des Rotors liefert eine Verkürzung der Baulänge.

Aus dem US-Patent 4 076 998 ist ein Oszillationsmotor bekannt, bei welchem die Anordnung wälzlagerfrei ist und die Führung durch eine niedrig-viskose Flüssigkeit erfolgt, welche zwischen Rotoraußenzylinder und Statorbohrung eingesperrt ist.

Aus dem US-Patent 4 632 501 ist ein elektromechanischer Resonanzoszillator bekannt, dessen schwingender Teil über zwei blattförmige Federn am festen Teil abgestützt wird. Die wirksame Federlänge kann mittels eines Schiebers variiert werden, um unterschiedliche Resonanzfrequenzen einzustellen. Der Federausschlag wird eingegrenzt und der Resonanzoszillator besitzt eine Schocksicherung.

Aus dem US-Patent 4 878 721 ist ein mechanisches Resonanzsystem bekannt, bei welchem oszillierende Schwingbewegungen eines Spiegels definiert nur um eine Asche erfolgen sollen.

Für Laserdrucker ist aus dem US-Patent 4 502 752 eine Anordnung bekannt, bei welcher der Spiegel zwischen zwei kollinearen Torsionsstäben eingespannt ist. Im Falle von Querschwingungen wird so ein Kippen des Spiegels vermieden.

Es ist die Aufgabe der Erfindung eine Lagerung für einen drehwinkelbegrenzten Rotor zu schaffen, welcher eine sehr kompakte Bauweise bei geringem Gewicht erlaubt.

Diese Aufgabe wird erfindungsgemäß durch den kennzeichnenden Teil des ersten Patentanspruchs gelöst.

Durch die erfindungsgemäße Lagerung erhält man eine sehr kompakte Bauweise, da der zweiseitig gelagerte Rotor und das elastische Rückstellelement nicht nacheinander sondern parallel angeordnet sind. Dies reduziert die benötigte Baulänge erheblich. Dabei wird die gewollte Drehwinkelbegrenzung des Rotors in seiner Rotationsachse so ausgenutzt, daß der vom Rotor nicht benötigte Bereich zur Anbringung eines elastischen Rückstellelementes verwendet wird.

Mit einem der beiden Lagerungskörper der Lagerung ist der Rotor fest verbunden (d.h. dreht sich der Rotor, so dreht sich dieser Lagerungskörper um denselben Betrag mit). Die feste Verbindung kann dabei z.B. durch Klebung, Einsteckung oder Festschraubung realisiert werden. Wesentlich ist dabei, daß die Drehung des Rotors zu einer entsprechenden Drehung des ersten Lagerungskörpers führt.

Anders erfolgt die Lagerung des Rotors im zweiten Lagerungskörper. Mit diesem ist der Rotor rotationsbeweglich verbunden. Der zweite Lagerungskörper gibt dem Rotor auch einen festen Halt, erlaubt aber die Drehbewegung des Rotors um seine Rotationsachse, ohne selbst von dieser Rotation betroffen zu sein. Deshalb kann dieser Lagerungskörper zum festen Anbau an andere, nicht von der Rotation des Rotors direkt betroffene Baugruppen verwendet werden.

Die beiden Lagerungskörper sind durch mindestens ein elastisches Rückstellelement miteinander verbunden, wobei das elastische Rückstellelement den Rotor nach einer durch eine auf ihn wirkende und von außen veranlaßte Kraft verursachten Drehbewegung wieder in seine Grundstellung zurückbewegt, solange es nicht zu einer unerwünschten irreversiblen Deformation des elastischen Rückstellelementes gekommen ist.

Wenn der Drehwinkel es zuläßt, ist es vorteilhaft, wenn das elastische Rückstellelement außerhalb der Rotordrehachse angeordnet ist. Dies erleichtert die Montage des Rotors in der Lagerung und ermöglicht andere Herstellverfahren der Anordnung.

Vorteilhafterweise ist das elastische Rückstellelement ein elastischer Stab oder besser noch eine Federplatte (welche auch manchmal unzutreffender weise als Blattfeder bezeichnet wird). Die Federplatte ist dabei ein plattenförmiger Körper aus einem elastischen Material (z.B. Federstahl).

Je nachdem, wie diese Federplatte zwischen den beiden Lagerungskörpern eingebaut ist, wirkt sie als Biegungs- oder als Torsionsfeder. Es ist dabei vorteilhaft, wenn die Federplatte als Biegungsfeder eingesetzt wird, da die Festigkeitswerte für die Biegebeanspruchung höher liegen und somit der Konstruktionspielraum größer ist.

Ist zusätzlich die Federplatte außerhalb der Rotordrehachse angeordnet, so liegt der Rotormassenschwerpunkt günstiger und motorisch angeregte äußere translatorische Schwingungen führen dann zu einer geringeren Lagerbelastung.

Es ist vorteilhaft, wenn die Längsachse des elastischen Rückstellelements zur Drehachse des Rotors radial nach außen und parallel zur Rotationsachse des Rotors ausgerichtet ist, da es auch damit zu einer geringeren Belastung des elastischen Rückstellelementes kommt und dieses dementsprechend leichter ausgeführt werden kann.

Dabei ist es vorteilhaft, wenn die Lagefixierung der beiden Lagerungskörper zueinander allein durch das elastische Rückstellelement erfolgt und dabei das elastische Rückstellelement direkt an den beiden Lagerungskörpern befestigt ist, da dies zu einer Gewichtsminimierung führt.

Vorteilhafterweise ist an dem Rotor eine, der Anzahl der Rückstellelemente angepaßte Anzahl von Ausstülpungen angebracht, welche von der Rotorachse nach außen weisen. Dabei muß zwischen den Ausstülpungen und den elastischen Rückstellelementen jeweils ein so großer Freireaum verbleiben, daß die drehwinkelbegrenzte Rotation des Rotors ungestört erfolgen kann.

Wenn man an mindestens einem, dem zweiten Lagerungskörper zugewandten Endbereich des federnden Rückstellelementes oder auf einem, dem Rückstellelement zugewandten Ende des zweiten Lagerungskörpers einen Anschlag für die Ausstülpungen des Rotors angebringt, erhält man einen mechanischen Überlastungsschutz der Anordnung. Dieser Überlastungsschutz verhindert eine Bewegung des Rotors über einen vorher festgelegten, winkelbegrenzten Drehbereich des Rotors und er sorgt dabei dafür, daß es nicht zu einer irreversiblen Deformation des elastischen Rückstellelements kommt und der Rotor nach einer Auslenkung immer wieder in seinen Ausgangsbereich zurückkehrt. Dieser Anschlag muß dabei lage- und ausgestaltungsmäßig der jeweiligen körperlichen Ausgestaltung der Rotorausstülpung angepaßt sein.

Indem man dafür sorgt, daß mindestend eine der Ausstülpungen durch eine magnetische Einrichtung ein magnetisches Feld erzeugt und um einen Teil der Lagerung zumindest im Bereich der Ausstülpung mindestens eine weitere magnetische Felder erzeugende Einrichtung anordnet, erhält man einen sehr kompakten kleinen drehwinkelbegrenzten Motor, wenn eine der magnetischen Einrichtungen ein variables Magnetfeld erzeugt. Dabei kann beispielsweise die eine magnetische Einrichtung ein Permanentmagnet und die andere magnetische Einrichtung eine stromdurchflossene Spule sein.

Vorteilhafterweise bringt man mindestens drei elastische Rückstellelemente zwischen den beiden Lagerungskörpern an, da diese Anordnung zu einer stabilen Lage der beiden Lagerungskörper zueinander bei jeder Orientierung des Lagers führt.

Eine wesentliche Gewichtseinsparung bei hervorragenden dynamischen Eigenschaften erhält man, wenn zumindest die beiden Lagerungskörper monolithisch aus einem einzigen massiven Körper gefertigt sind. Das beste Resultat erhält man, wenn zusätzlich auch der Rotor aus demselben Körper gefertigt wurde.

Das bevorzugte Einsatzgerät der erfindungsgemäßen Lagerung ist ein Scanner und insbesondere ein Galvanoscanner, da hier drehwinkelbegrenzte Rotationen mit rascher Folge, d.h. bei hohen dynamischen Belastungen erfolgen. Gerade bei diesen hohen dynamischen Belastungen zeigen sich auch die hervorragenden Eigenschaften des erfindungsmäßigen Lagers am deutlichsten.

Die Erfindung wird nachstehend in beispielhafterweise anhand von Zeichnungen näher erläutert, wobei weitere wesentliche Merkmale sowie dem besseren Verständnis dienende Erläuterungen und Ausgestaltungsmöglichkeiten des Erfindungsgedankens beschrieben sind.

Dabei zeigen:
- Fig. 1a: eine 3-D-Darstellung des erfindungsgemäßen Lagers;
- Fig. 1b: eine 3-D-Darstellung des zu Fig. 1c gehörigen Rotors;
- Fig. 1c: eine Vorderansicht des Rotors aus Fig. 1b;
- Fig. 1d: einen Schnitt durch das erfindungsgemäße Lager aus Figur 1a;
- Fig. 1e: eine Bewegungsskitze des elastischen Rückstellelementes der Lagers aus Figur 1a;
- Fig. 1f: das erfindungsgemäße Lager aus Figur 1a mit eingesetztem Rotor aus Figur 1b;
- Fig. 2: eine weitere Ausführungsform des Lagers mit integriertem Rotor; und
- Fig. 3: die Verwendung des Lagers mit integriertem Rotor in einem Elektromotor.

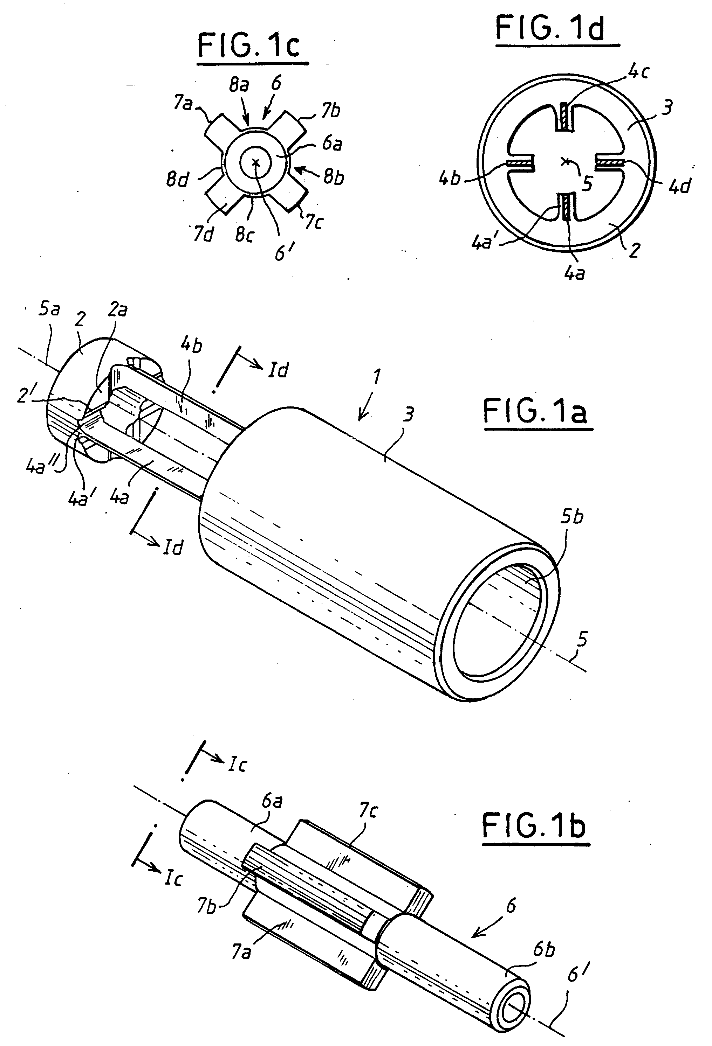

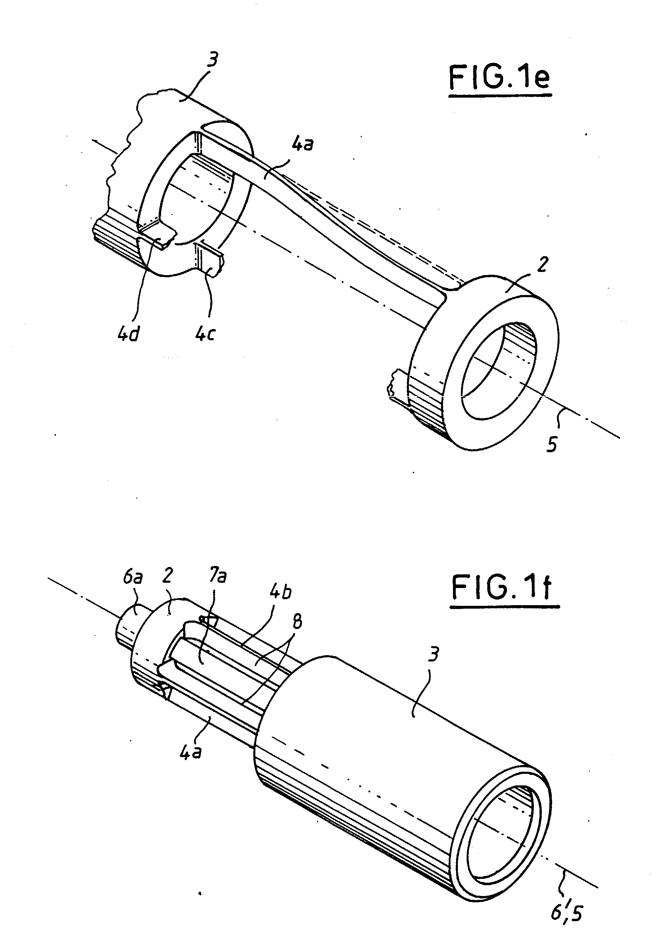

In den Figuren 1a-f ist eine mögliche Variante des erfindungsgemäßen Rotorlagers (1) dargestellt.

Das Lager (1) besteht aus zwei Lagerungskörpern (2, 3), welche durch vier Federplatten (4a, 4b, 4c, 4d) miteinander verbunden sind. Diese Federplatten (4a-d) sind die elastischen Rückstellelemente der Lagerung (1) und bestehen aus elastischen Stäben rechteckigen Querschnitts.

Aus einer der beiden Deckfläche (2a) des ersten Lagerungskörpers (2) gehen die aus vier Federplatten (4a-d) bestehenden elastischen Rückstellelemente ansatzlos heraus. Die Federplatten (4a-d) haben eine verbreiterte Basis (4a'), um einen Schutz vor Bruch in diesem stark beanspruchten Bereich zu erhalten.

Seitlich der Federplatten (4a-d) ist jeweils eine Vertiefung (4a'') vorhanden. Diese Vertiefung (4a'') wird durch einen Steg (2') seitlich begrenzt. Zwischen den Stegen (2') zweier benachbarter Federplatten (4a-d) befindet sich eine weitere, genau zwischen den zwei Federplatten angeordnete Vertiefung (2a). Auf der gegenüberliegenden Seite des Lagers (1) sind die Federplatten (4a-d) entsprechend an einer Deckfläche des zweiten Lagerungskörpers (3) befestigt. Die vier vorhandenen Federplatten (4a-d) sind gleichmäßig auf dem Umfang der Lagerungskörper (2, 3) verteilt.

In der Figur 1e ist die Bewegung des elastischen Rückstellelementes (4a) explizit an einem Element dargestellt. Da die Federplatte (4a) auf Biegung anstatt auf Torsion beansprucht wird, liegen bei ihr die Festigkeitswerte höher, so daß der konstruktive Spielraum für sie größer ist.

Beide Lagerungskörper (2, 3) sind monolithisch und kreiszylinderförmig und besitzen um die Mittelachse (5) eine kreisrunde Öffnung (5a, 5b). Die Öffnung (5a) im ersten Lagerungskörper (2) ist so groß, daß man ein Endstück (6a) des Rotors (6) in sie hineinführen kann. Die zweite Öffnung (5b) im zweiten Lagerungskörper (3) ist so groß, daß man durch diese zweite Öffnung (5b) den Rotor (6) in seine richtige Betriebsstellung schieben kann. In dieser Öffnung (5b) ist der Rotor (6) drehbeweglich gelagert.

Der Raum zwischen den Federplatten (4a-d) ist frei. Die Federplatten (4a-d) haben eine Längsausdehung, welche parallel verschoben zur Mittelachse (5) des Lagers verläuft. Sie haben im Querschnitt die Form eines Rechtecks, dessen längste Seite sich radial von der Mittelachse (5) nach außen erstreckt.

Die Federplatten (4a-d) und die Lagerungskörper (2, 3) bestehen aus einem Material und sind monolithisch aus einem Werkstückkörper gefertigt.

Der Rotor (6) besteht im wesentlichen aus einem kreiszylindrischen Körper. Im mittleren Bereich besitzt dieser kreiszylindrische Körper (6) Ausstülpungen (7a-d).

Diese Ausstülpungen (7a-d) haben im wesentlichen einen quadratischen Querschnitt, wobei dieser Querschnitt den Freiraum zwischen den Federplatten (4a-d) des Lagers (1) so angepaßt sein muß, daß der erwünschte Drehwinkel des Rotors (6) im Lager (1) noch realisiert werden kann. Die rechteckstabförmigen Körper der Ausstülpungen (7a-d) sind mit einer ihrer Längsseite an den kreiszylindrischen Körper des Rotors (6) so befestigt, daß ihre Längsachsen parallel zur Mittelachse (6') des Rotors (6), radial nach außen versetzt, verlaufen. Auf dem Umfang des Rotors (6) sind die Ausstülpungen (7a-d) gleichmäßig so verteilt, daß zwischen ihnen jeweils noch ein Freiraum (8a-d) vorhanden ist.

Zur Gewichtsersparnis ist der Rotor (6) um seine Mittelachse (6') hohl ausgeführt.

Durch die Ausstülpungen (7a-d) ergeben sich zu beiden Enden des Rotors (6) hin kreiszylinderförmige Körperenden (6a, 6b), wobei eine der Körperenden (6a) mit seinem äußeren Durchmesser gerade in die Öffnung (5a) des ersten Lagerungskörpers (2) hineinpaßt.

Im eingebauten Zustand des Rotors (6) in die Lagerung (1) ist der Rotor (6) mit dem ersten Lagerungskörper (2) fest verbunden, aber im zweiten Lagerungskörper (3) rotationsbeweglich gelagert. Dadurch kann sich der Rotor (6) in der Lagerung (1) im eingebauten Zustand um seine Mittelachse (6'), welche auch gleichzeitig seine Rotationsachse ist, um einen gewissen Winkelbetrag drehen. Die Mittelachse (6') des Rotors (6) stimmt im eingebauten Zustand gleichzeitig mit der Mittelachse (5) des Lagers (1) überein, so daß man eine gute Gewichtsverteilung der Anordnung (1, 6) erhält. Die Drehung des Rotors wird durch die Federplatten (4a-d) begrenzt, wobei die Federplatten (4a-d) den Rotor (6) nach einer Auslenkung wieder in seine Ausgangsstellung zurück bringen. Um eine feste Lagebeziehung zwischen dem ersten und dem zweiten Lagerungskörper (2, 3) sicherzustellen und um gleichzeitig eine Erhöhung der Radialsteife zu erhalten, kann man den erten Lagerungskörper (2) mit dem zweiten Lagerungskörper (3) rotationsbeweglich verbinden. Dies kann vorteilhafterweise durch ein Kugellager (in der Figur nicht dargestellt) erfolgen

Auch im eingebauten Zustand des Rotors (6) in das Lager (1) verbleibt zu beiden Seiten der Ausstülpungen (7a-d) jeweils ein genügend großer Freiraum (8) zur Realisierung der Rotordrehung im Lager (1).

Wenngleich der Rotor (6) und das monolithisch aus einem Werkstück hergestellte Lager (1) in der Figur 1 aus Übersichtlichkeitsgründen getrennt dargestellt ist, können diese Teile (1, 6) auch zusammen aus einem Werkstück hergestellt werden. Dies ist durch die erfindungsgemäße Anbringung der elastischen Rückstellelemente (4a-d) um den Rotor (6) mit den heute bekannten Maschinen relativ einfach möglich. Diese Herstellung des Lagers (1) mit dem Rotor (6) aus einem einzigen Werkstück hat den Vorteil, daß die äußeren Abmessungen der Anordnung (1, 6) extrem klein gehalten werden können. Dies eröffnet dem Lager (1) mit dem Rotor (6) ein weites Anwendungsfeld und erleichtert den Einsatz der Anordnung (1, 6) in Scannern, insbesondere in Galvanometerscannern, sehr.

Bei der monolithisch hergestellten Gesamtanordnung kann es zu einem Materialproblem kommen, da gute Federeigenschaften und gute magnetische Eigenschaften schwer gleichzeitig machbar sind. Dies ist aber kein prinzipielles Problem, da man die Ausstülpungen (7a-d) sehr leicht von außen aushöhlen kann und den dadurch gewonnenen Hohlraum (in der Figur nicht dargestellt) mit einem passenden, sehr gut magnetisierbaren Material auffüllen kann.

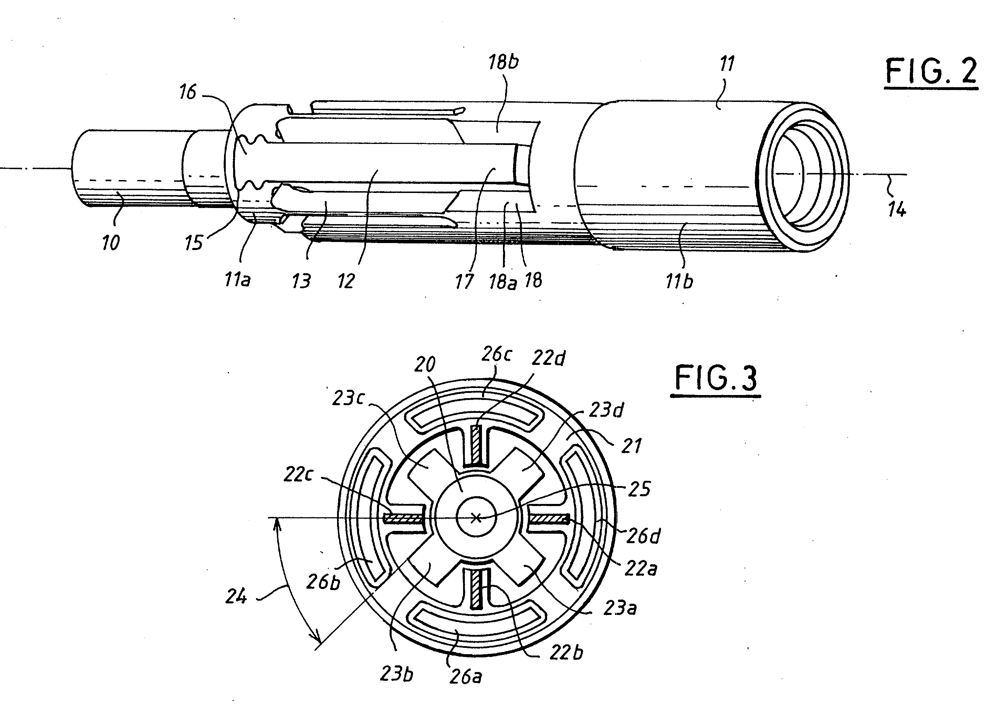

In der Figur 2 ist nun eine weitere Ausführungsform dargestellt, wobei der Rotor (10) bereits im Torsionskreuzstablager (11) integriert ist. Die Ausstülpungen (12) des Rotors (10) liegen so zwischen den elastischen Rückstellelementen (13) des Lagers (11), daß sich der Rotor (10) um einen begrenzten Drehwinkel um seine Rotordrehachse (14) drehen kann.

Im ersten Lagerungskörper (11a) befindet sich eine Ausnehmung (15) zur Aufnahme eines entsprechend geformten Körpers (16) am Rotor (10). Dieser Körper (16) am Rotor (10) steht senkrecht zur Rotationsachse (14) und ist in diesem Beispiel eine Verlängerung der Ausstülpung (12). Der Körper (16) ist paßgenau in der Ausnehmung (15) befestigt und sorgt für eine quasi-monolithische Verbindung zwischen dem Rotor (10) und dem Lager (11). Damit ist der Rotor (10) im ersten Lagerungskörper (11a) radial eingefügt und zwischen beiden besteht eine feste Verbindung.

Im zweiten Lagerungskörper (11b) ist eine zusätzliche Ausnehmung (18) vorhanden, in welche in diesem Beispiel eine axiale Verlängerung (17) einer Ausstülpung (12) hineinragt. Die Ausnehmung (18) im zweiten Lagerungskörper (11b) ist so beschaffen, daß sie den Rotor (10) im drehwinkelbegrenzten Bereich in seiner Bewegung nicht behindert. Gelangt aber der Rotor (10) bei einer Drehung an die Grenze seines drehwinkelbegrenzten Bereiches, so stellen die zur Rotationsachse (14) orientierten Flächen der Ausnehmung (18) für die axiale Verlängerung (17) der Ausstülpung (12) Anschlagflächen (18a, 18b) dar und hindern den Rotor (10) am Weiterdrehen. Damit ist für das Lager (11) ein sehr wirksamer Überlastschutz realisiert, welcher ohne zusätzlichen Platzbedarf auskommt.

Auch diese Ausführung des Lagers (11) mit Rotor (10) hat dieselben Vorteile des schon in Figur 1 dargestellten Lagers:
a) Die Gesamtbaulänge kann minimal gehalten werden, da das Rückstellelement (13) nicht in achsialer Verlängerung des Rotors (10), sondern innerhalb des Lagers mit den Rückstellelementen angeordnet ist.
b) Da keine zusätzlichen Halterungen/Befestigungen für das Rückstellelement (13) erforderlich sind, ergibt sich eine Gewichtseinsparung. Durch die quasimonolithische bzw. monolithische Bauweise des Lagers (11) mit Rotor (10) ist das Rückstellelement (13) integraler Bestandteil der Lager-Rotor-Baugruppe.
c) Das Rückstellelement (13) ist als (blattförmige) Feder (13) ausgebildet, welche überwiegend auf Biegung beansprucht wird. Die Festigkeitswerte sind aber bei Biegebeanspruchung höher als bei Torsionsbeanspruchung, so daß der konstruktive Spielraum bei der individuellen Ausgestaltung der Anordnung größer wird.
d) Durch die Anordnung des Rotormassenschwerpunktes zwischen den Rückstellelementen (13) führen motorisch von außen angeregte translatorische Schwingungen zu einer geringeren Lagerbelastung, wobei die Rückstellfedern eine Lagerungsfunktion besitzen (Lagerfunktion der Rückstellfedern (13)).

Zusätzlich ergibt sich für die in Figur 2 dargestellten Anordnungen der Vorteil eines
e) Überlastschutzes. Der Auslenkwinkel ist durch die Anschlagflächen (18a, 18b), welche durch die monolithische Bauweise während der Herstellung der Kontur des Rückstellelementes (13) ermöglicht werden, mechanisch begrenzt. Hingegen könnte ein Torsionsstab bei Überbelastung (z.B. im Resonanzfall) brechen, wenn man hier keinen Überlastschutz vorsieht. Der Überlastschutz läßt sich bei der erfindungsgemäßen Anordnung dabei ohne zusätzlichen Platzbedarf realisieren.

Die Rückstellfedern (13) der in Figur 2 dargestellten Anordnung (entsprechendes gilt auch für die in Figur 1 dargestellte Anordnung) haben eine doppelte Funktion.

Einerseits sorgen sie für die Erzeugung eines elastischen Rotorrückstellmomentes, andererseits übernehmen sie teilweise oder vollständig die Lagerfunktion für den Rotor (10), weshalb man das Lager auch als richtkraftbehaftetes Lager bezeichnen kann.

Die Rückstellelemente (13) sind dabei in achsialer Richtung verlaufende Blatt- bzw. blattförmige Federn. Diese Federn sind (baut man das Lager mit Rotor in einen Elektromotor ein) innerhalb der Statorbohrung angeordnet und liegen in etwa auf gleicher achsialer Position wie der angetriebene Rotor. Dabei wird der motorprinzipbedingte eingeschränkte Verdrehwinkel des Rotors ausgenutzt, um Einbauplatz für die Rückstellelemente zu gewinnen.

Die Anzahl der als elastische Rückstellelemente verwendeten blattförmigen Federn kann entsprechend den Anforderungen unterschiedlich gewählt werden.

Der mögliche Einsatz des Lagers mit Rotor in einem Elektromotor soll nun anhand der Figur 3 näher beschrieben werden.

In Figur 3 ist der Rotor (20) in der Lagerung (21) mit den blattförmigen Rückstellfedern (22a-d) dargestellt. Die Ausstülpungen (23a-d) des Rotors (20) sind zwischen diesen Rückstellfedern (22a-d) so angeordnet, daß sie sich zu beiden Seiten um einen gewissen Betrag (24) drehen können.

Das Material der Ausstülpungen (23a-d) besteht aus einem hartmagnetischem Material, welches magnetisiert wurde. Damit stellen die Ausstülpungen (23a-d) Permanentmagnete dar.

Um die Rotationsachse (25) des Rotors (20) herum sind außerhalb der Ausstülpungen (23a-d) Spulen (26a-d) angeordnet. Wird durch diese Spulen (26a-d) ein elektrischer Strom geschickt, so erzeugen die Spulen (26a-d) ein magnetisches Feld. Dieses von den Spulen (26a-d) erzeugte magnetische Feld übt auf die als Permanentmagneten ausgebildeten Ausstülpungen (23a-d) eine Kraft aus, welche den Rotor (20) zu einer entsprechenden Drehbewegung veranlaßt. Werden die Spulen (26a-d) nicht mehr vom Strom durchflossen, setzt diese Kraft, welche die Biegekraft der Rückstellfedern (22a-d) überwunden hat, aus und die Rückstellfedern (22a-d) sorgen über die feste Verbindung zwischen Rotor (20) und dem ersten Lagerungskörper (in dieser Figur nicht dargestellt) dafür, daß der Rotor (20) sich wieder in seine Ausgangsstellung bewegt.

Alles in allem erhält man einen kreisförmigen kleinen drehwinkelbegrenzten Motor, welcher, befestigt man am Rotor (20) oder am ersten Lagerungskörper einen Spiegel (in dieser Figur nicht dargestellt), sehr gut in einem Zeilenscanner bzw. einem Galvanometerscanner eingebaut werden kann.

Die vorstehenden Figuren mit den dazugehörigen Beispielen sollen die Erfindung lediglich erläutern, ohne daß die Erfindung auf die konkrete Ausgestaltung der vorstehenden Erfindung begrenzt sein soll. Insbesondere die konkrete Ausgestaltung des Motors kann von der stark schematischen Darstellung in Fig. 3 abweichen und gemäß dem bekannten Stand der Technik für den Bau von Elektromotoren in anderer Art und Weise ausgeführt werden.

## Patentansprüche

1. Lagerung für einen drehwinkelbegrenzten Rotor (6,10,20) mit einer Rotordrehachse (6',14, 25) und mindestens einem elastischen Rückstellelement (4a-d,13, 22a-d), dadurch gekennzeichnet, daß die Lagerung (1, 11, 21) des Rotors (6, 10, 20) zumindest aus einem ersten (2, lla) und einem zweiten (3, 11b) Lagerungskörper aufgebaut ist, daß der Rotor (6, 10, 20) an einem sich dem Rotorbereich anschließendem ersten Teil (6a) mit dem ersten Lagerungskörper (2, 11a) an einem ersten Lagerungsbereich fest verbunden ist, daß der Rotor (6, 10, 20) an einem, sich dem Rotorbereich anschließenden zweiten Teil (6b) mit dem zweiten Lagerungskörper (3, 11b) an einem zweiten Lagerungsbereich rotationsbeweglich verbunden ist, und daß der erste Lagerungskörper (2, 11a) mit dem zweiten Lagerungskörper (3, 11b) durch mindestens ein elastisches Rückstellelement (4a-d, 13, 22a-d) verbunden ist.

2. Lagerung nach Anspruch 1, dadurch gekennzeichnet, daß das elastische Rückstellelement (4a-d, 13, 22a-d) außerhalb der Rotordrehachse (6', 14, 25) angeordnet ist.

3. Lagerung nach einem der Ansprüche 1 oder 2, dadurch gekennzeichnet, daß das elastische Rückstellelement (4a-d, 13, 22a-d) ein elastischer Stab ist.

4. Lagerung nach einem der Ansprüche 1-3, dadurch gekennzeichnet, daß das elastische Rückstellelement (4a-d, 13, 22a-d) eine Federplatte ist.

5. Lagerung nach einem der Ansprüche 1-4, dadurch gekennzeichnet, daß die Längsachse des elastischen Rückstellelements (4a-d, 13, 22a-d) zur Drehachse des Rotors (6', 14, 25) radial nach außen und parallel zur Rotationsachse (6', 14, 25) des Rotors (6, 10, 20) ausgerichtet ist.

6. Lagerung nach einem der Ansprüche 2-5, dadurch gekennzeichnet, daß an dem Rotor (6, 10, 20) mindestens eine, von der Rotorachse (6', 14, 25) nach außen weisende Ausstülpung (7a-d, 12, 23a-d) angebracht ist, und daß zwischen der Ausstülpung (7a-d, 12, 23a-d) und dem elastischen Rückstellelement (4a-d, 13, 22a-d) ein Freiraum vorhanden ist.

7. Lagerung nach Anspruch 6, dadurch gekennzeichnet, daß an dem zweiten Lagerungskörpers (11b) ein Anschlag (18) angebracht ist, welcher eine Bewegung des Rotors (10) über einen vorher festgelegten, winkelbegrenzten Bereich verhindert.

8. Lagerung nach einem der Ansprüche 6 oder 7, dadurch gekennzeichnet, daß mindestens eine Ausstülpung (23a-d) eine erste magnetische Einrichtung enthält, daß um die Ausstülpungen (23a-d) eine zweite magnetische Einrichtung (26a-d) angeordnet ist und daß mindestens eine magnetische Einrichtung (26a-d) in der Stärke des durch sie erzeugten Magnetfeldes variabel ist.

9. Lagerung nach Anspruch 8, dadurch gekennzeichnet, daß die Ausstülpungen (23a-d) aus einem magnetisierbaren Material aufgebaut sind.

10. Lagerung nach einem der Ansprüche 2-9, dadurch gekennzeichnet, daß mindestens drei elastische Rückstellelemente (4a-d, 13, 22a-d) zwischen dem ersten und dem zweiten Lagerungskörper (2, 3, 11a, 11b) angebracht sind.

11. Lagerung nach einem der Ansprüche 1-10, dadurch gekennzeichnet, daß die beiden Lagerungskörper (2, 3, 11a, 11b) und das elastische Rückstellelement (4a-d, 13, 22a-d) monolithisch aus einem einzigen massiven Körper gefertigt sind.

12. Lagerung nach einem der Ansprüche 1-11, dadurch gekennzeichnet, daß im ersten Lagerungskörper mindestens eine Ausnehmung (15) angebracht ist, daß an dem Rotor (10) ein zur Rotationsachse (14) senkrecht stehender Körper (16) an seinem ersten Ende angebracht ist, und daß dieser Körper (16) paßgenau in der Ausnehmung (15) befestigt ist.

13. Lagerung nach Anspruch 11, dadurch gekennzeichnet, daß zusätzlich der Rotor (6, 10, 20) aus demselben massiven Körper gefertigt ist.

14. Lagerung nach einem der Ansprüche 1-13, dadurch gekennzeichnet, daß die Lagerung (1, 11) in einem Scanner eingebaut ist.

15. Lagerung nach Anspruch 14, dadurch gekennzeichnet, daß der Scanner ein Galvanoscanner ist.

## Claims

1. Bearing for a limited rotation rotor (6,10,20) with an axis of rotation (6', 14, 25) and a minimum of one elastic reset component (4a-d, 13, 22a-d), characterized by the fact that the bearing (1, 11, 21) of the rotor (6, 10, 20) is composed of at least a first (2, 11a) and a second (3, 11b) bearing component, that the rotor (6, 10, 20) in a first part (6a) adjacent to the rotor component is permanently connected with the first bearing component (2, 11a) in a first bearing area, that the rotor (6, 10, 20) in a second part (6b) adjacent to the rotor component is connected with the second bearing component (3, 11b) in a second bearing area so as to be rotationally mobile, and that the first bearing component (2, 11a) is connected with the second bearing component (3, 11b) by a minimum of one elastic reset component (4a-d, 13, 22a-d).

2. Bearing according to claim 1, characterized by the fact that the elastic reset component (4a-d, 13, 22a-d) is arranged outside of the rotor axis of rotation (6', 14, 25),

3. Bearing according to one of the claims or 2, characterized by the fact that the elastic reset component (4a-d, 13, 22a-d) is an elastic bar.

4. Bearing according to one of the claims 1-3, characterized by the fact that the elastic reset component (4a-d, 13, 22a-d) is a spring plate.

5. Bearing according to one of the claims 1-4, characterized by the fact that the longitudinal axis of the elastic reset component (4a-d, 13, 22a-d) is aligned radially towards the exterior with respect to the axis of rotation (6', 14, 25) and parallel to the axis of rotation (6', 14, 25) of the rotor (6, 10, 20).

6. Bearing according to one of the claims 2-5, characterized by the fact that a rotor (6, 10, 20) features at least on point away from the axis of rotation (6', 14, 25), and that a clearance exists between protuberance (7a-d, 12, 23a-d) and the elastic reset component (4a-d, 13, 22a-d).

7. Bearing according to claim 6, characterized by the fact that a second bearing component (11b) is provided with a stop (18) which prevents the rotor (10) moving beyond a previously defined rotation range.

8. Bearing according to one of the claims 6 or 7, characterized by the fact that at least one protuberance (23a-d) contains a first magnetic device, that a second magnetic device (26a-d) is arranged about the protuberance (23a-d), and that at least one magnetic device (26a-d) can be varied in power of the magnetic field it generates.

9. Bearing according to claim 8, characterized by the fact that the protuberances (23a-d) are made of a magnetizable material.

10. Bearing according to one of the claims 2-9, characterized by the fact that at least three elastic reset components (4a-d, 13, 22a-d) are arranged between' the first and the second bearing component (2, 3, 11a, 11b).

11. Bearing according to one of the claims 1-10, characterized by the fact that the two bearing components (2, 3, 11a, 11b) and the elastic reset component (4a-d, 13, 22a-d) are made monolithically from a single, solid body.

12. Bearing according to one of the claims 1-11, characterized by the fact that the first bearing component has at least one recess (15), that the rotor (10) has at its first end a body (16) which is perpendicular to the axis of rotation (14), and that this body (16) fits exactly into and is attached in the recess (15).

13. Bearing according to claim 11, characterized by the fact that the rotor (6,10, 20) is also made from the same solid body.

14. Bearing according to one of the claims 1-13, characterized by the fact that the bearing (1,11) is installed inside a scanner.

15. Bearing according to claims 14, characterized by the fact that the scanner is a galvanometer scanner.

## Revendications

1. Logement d'un rotor à angle de rotation limité (6, 10, 20) doté d'un axe de rotation (6', 14, 25) et d'au moins un élément de rappel élastique (4a-d, 13, 22a-d), caractérisé en ce que le logement (1, 11, 21) du rotor (6, 10, 20) se compose au minimum d'un premier (2, 11a) et d'un second (3, 11b) corps de logement, que le rotor (6,10, 20) est solidaire du premier corps de logement (2, 11a) par sa première extrémité (6a) précédant le corps du rotor et s'engageant dans une première zone de logement, que le rotor (6, 10, 20) est logé par sa seconde extrémité (6b) succédant au corps du rotor dans une seconde zone de logement de manière à être mobile en rotation par rapport au second corps de logement (3, 11b) et que le premier (2, 11a) et le second (3, 11b) corps de logement sont reliés entre eux par au moins un élément de rappel élastique (4a-d, 13, 22a-d).

2. Logement selon la revendication 1, caractérisé en ce que ledit élément de rappel élastique (4a-d, 13, 22a-d) est disposé en dehors de l'axe de rotation (6', 14, 25) du rotor.

3. Logement selon la revendication 1 ou 2, caractérisé en ce que ledit élément de rappel élastique (4a-d, 13, 22a-d) est constitué par une barre élastique.

4. Logement selon l'une des revendications 1 à 3, caractérisé en ce que ledit élément de rappel élastique (4a-d, 13, 22a-d) est constitué par un ressort à lame.

5. Logement selon l'une des revendications 1 à 4, caractérisé en ce que l'axe longitudinal de l'élément de rappel élastique (4a-d, 13, 22a-d) est parallèle à l'axe de rotation (6', 14, 25) du rotor (6, 10, 20) et décalé radialement vers l'extérieur par rapport audit axe de rotation (6', 14, 25).

6. Logement selon l'une des revendications 2 à 5, caractérisé en ce que le rotor (6,10, 20) porte au moins une saillie (7a-d, 12, 23a-d) orientée vers l'extérieur vue de l'axe de rotation (6', 14, 25) et qu'un espace dégagé est disponible entre ladite saillie (7a-d, 12, 23a-d) et l'élément de rappel élastique (4a-d, 13, 22a-d).

7. Logement selon la revendication 6, caractérisé en ce que le second corps de logement (11b) porte une butée (18) qui exclut une rotation du rotor (10) au-delà d'une plage de rotation prédéterminée.

8. Logement selon la revendication 6 ou 7, caractérisé en ce que l'une au moins des saillies (23a-d) contient un dispositif magnétique, qu'un deuxième dispositif magnétique (26a-d) est disposé de façon à entourer lesdites saillies (23a-d) et que l'un au moins des dispositifs magnétiques (26a-d) crée un champ magnétique d'intensité variable.

9. Logement selon la revendication 8, caractérisé en ce que les saillies (23a-d) sont constituées par du matériau aimantable.

10. Logement selon l'une des revendications 2 à 9, caractérisé en ce que trois éléments de rappel élastiques (4a-d, 13, 22a-d) au moins sont aménagés entre le premier et le second corps de logement (2, 3, 11a, 11b).

11. Logement selon l'une des revendications 1-10, caractérisé en ce que les deux corps de logement (2, 3, 11a, 11b) et l'élément de rappel élastique (4a-d, 13, 22a-d) sont fabriqués sous forme monolithique dans un corps massif unique.

12. Logement selon l'une des revendications 1-11, caractérisé en ce qu'au moins un creux (15) est aménagé sur le premier corps de logement, qu'un corps (16) perpendiculaire à l'axe de rotation (14) est fixé d'un côté sur le rotor (10) et que ledit corps (16) s'engage avec précision de l'autre côté dans ledit creux (15).

13. Logement selon la revendication 11, caractérisé en ce que le rotor (6, 10, 20) est façonné lui aussi à partir du même corps massif.

14. Logement selon l'une des revendications 1-13, caractérisé en ce le logement (1, 11) est intégré à un scanner.

15. Logement selon la revendication 14, caractérisé en ce que le scanner est un scanner galvanométrique.
